(19) Europäisches Patentamt
European Patent Office
Office européen des brevets

(11) Publication number: 0 242 130 A2

(12) **EUROPEAN PATENT APPLICATION**

(21) Application number: 87303115.7

(51) Int. Cl.4: G11B 27/02

(22) Date of filing: 09.04.87

(30) Priority: 12.04.86 JP 84801/86

(43) Date of publication of application: 21.10.87 Bulletin 87/43

(84) Designated Contracting States: AT DE FR GB NL

(71) Applicant: SONY CORPORATION
7-35 Kitashinagawa 6-Chome Shinagawa-ku
Tokyo 141(JP)

(72) Inventor: Sashou, Hidehiki
c/o Sony Corporation 7-35 Kitashinagawa 6-chome
Shinagawa-ku Tokyo(JP)
Inventor: Kizu, Soujiro
c/o Sony Corporation 7-35 Kitashinagawa 6-chome
Shinagawa-ku Tokyo(JP)

(74) Representative: Ayers, Martyn Lewis Stanley et al
J.A. KEMP & CO. 14 South Square Gray's Inn
London, WC1R 5EU(GB)

(54) **Electronic editing apparatus.**

(57) An electronic editing system utilizes time code signals for detecting color frame phase of video signals reproduced by a playback-side video tape recorder and by a recording-side video tape recorder. In order to enable this operation, color subcarrier phases are identified by a frame data of the time code signal during test mode operation. In the editing operation, the color subcarrier phases of the video signals of the playback-side video tape recorder and the recording-side video tape recorders are derived on the basis of the time code signals at editing points. The utilizing the color subcarrier phases identified by locking a color framing pulses of the video signal with a reference synchronizing signal, based on which a reference color frame phase can be derived, detecting difference of phase between the time code signal and the color framing pulse, and detecting difference of phase between the color framing pulse and a color frame phase of the video signal on the video tape.

FIG.1

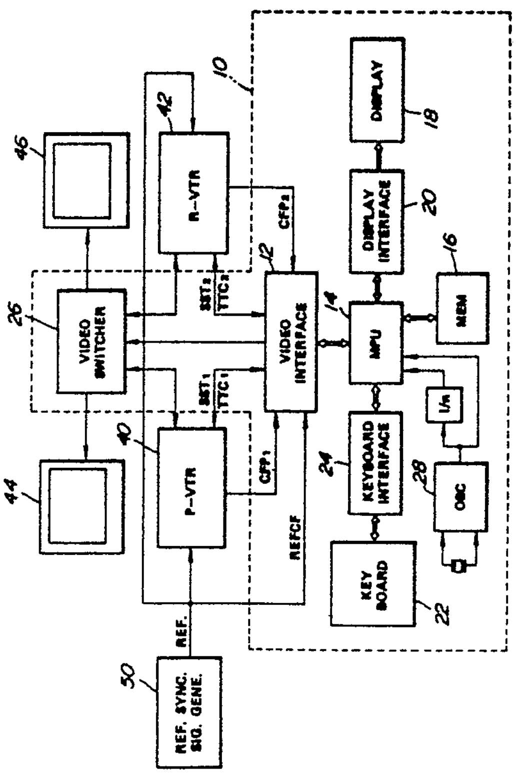


EP 0 242 130 A2

# ELECTRONIC EDITING APPARATUS

## Field of the Invention

The present invention relates generally to an electronic editing apparatus. More specifically, the invention relates to an apparatus for performing color frame editing.

## Description of the Prior Art

In general, in editing a video tape, a desired portion of an original video tape is reproduced onto a master tape at a desired portion thereof. A time code signal is generally recorded on a video tape in the longitudinal direction thereof for indicating and detecting the tape position (tape time). Thus, the time code data for the editing start point, that is, the in-point of the original tape, and the time code data for the editing start point of the master tape are stored in the memory of an editing apparatus.

Therefore, before starting the actual editing operation, an in-point is determined for use in each of VTRs and then each tape is positioned at a pre-roll point in each of the VTRs. The pre-roll point is a tape position located ahead of the in-point by, for example, 5 seconds of tape running time. Thus, during the editing operation, the tape begins running from the pre-roll point in each of the VTRs.

When the two VTRs bearing the original and master tapes are started, time codes are read from the respective tapes of the VTRs. The difference between each of the read-out time codes and the time code at each of the respective determined in-points is calculated, and the running of the original tape, that is, the phase thereof, is controlled so that the values of the above differences are the same. When the differences are both zero, the VTR for the master tape is operated in its recording mode to record therefrom a desired video signal reproduced from the original tape.

In other words, during the time period in which the pre-roll portion of each tape is running past the heads of the VTRs, a control operation is carried out so that the values of the time codes for the respective registered in-points are made equal. Since a time-code is provided corresponding to every frame of a picture, the time intervals, within which the respective tapes arrive at their in-points are made equal and frame synchronization is established by controlled movements of the two tapes. Therefore, synchronizing signals are continuous from the video signal previously recorded on the master tape and the video signal newly recorded from the original tape so that the editing operation can be performed with no picture disturbance.

On the other hand, a color video signal is recorded subsequent to a prerecorded color video signal, it is necessary that the subcarrier of the color video signal is also continuous from the previously recorded color video signal to the newly recorded color video signal in order to assure that the displayed picture has the correct hue. The process for keeping the continuity of the subcarrier at the editing point is called color frame editing.

As is well known, the phase of the color subcarrier signals of a color televison signal in NTSC system shifts through 4 fields in one cycle. On the other hand, in PAL system, phase of the subcarrier signals of the color television signal shifts through 8 fields in one cycle. In order to indicate each of the phase shift cycles of the color subcarrier signals of the color television signal, an recurring index signal is superimposed on a control signal (CTL signal) and is recurrent every given number of field, e.g. every four (4) fields in NTSC system, eight (8) fields in PAL system. The index signal will be hereafter referred to as "color framing pulse" or "color frame pulse". Based on the color framing pulse, the subcarrier phase in each field, which will be hereafter referred to as "color frame phase" in the color subcarrier phase shifting cycle which will be referred to as "color frame cycle" can be derived.

In the conventional color frame editing operation utilizing the CTL signal superimposed the color frame pulses, the time code signal and the color framing pulses reproduced from the playback video tape recorder and the recording video tape recorder are supplied to an edit control apparatus in order to detect synchroneous condition of the video tape recorders. As is well known, a plurality of types of information are supplied to the edit control apparatus in addition to the time code signals and the color framing pulses. Therefore, in order to establish synchronize the playback video tape recorder and the recording video tape recorder, cables, connectors and so forth for transfering the color framing pulses are required. In addition, in order to detect the color framing pulses, an additional electronic circuit is required in the edit control apparatus. This makes the editing control apparatus bulky and complicated in construction.

## SUMMARY OF THE INVENTION

Therefore, it is an object of the present invention is to provide an electronic editting system for video tape recorders, which is satisfactorily compact and of simple construction.

Another and more specific object of the invention is to provide an electronic editing system which does not require cables, connectors and circuits specifically adapted for transferring and detecting color framing pulses.

In order to accomplish the aforementioned and other objects of the invention, an electronic editing system utilizes time code signals for detecting color frame phase of video signals reproduced by a playback video tape recorder and by a recording video tape recorder. In order to enable this, color subcarrier phases are identified by frame data in the time code signal during test mode operation. In the editing operation, the color subcarrier phases of the video signals of the playback video tape recorder and the recording video tape recorders are derived on the basis of the time code signals at editing points.

In practical operation, the color subcarrier's phase is identified by locking color framing pulses of the video signal to a reference synchronizing signal, from which reference color frame phase can be derived; and then detecting the difference in phase between the time code signal and the color framing pulse; and detecting difference of phase between the color framing pulse and color frame phase of the video signal on the video tape.

According to one aspect of the invention, an editing control system comprises a playback video tape recorder loaded thereon with a video tape with video information including time code signals and color subcarrier which has a regular phase variation cycle which returns an initial phase after a given number of frames recorded thereon, a recording-side video tape recorder loaded thereon with a video tape with video information recorded thereon including time code signals and a color subcarrier which has a phase variation cycle corresponding to that recorded on the playback-side video tape, means for detecting phase of a first color subcarrier in the video information recorded on the playback-side video tape relative to the time code signals reproduced from the playback-side video tape recorder, means for detecting phase of a second color subcarrier in the video information recorded on the recording-side video tape relative to the time code signals reproduced from the recording-side video tape recorder, means for setting first and second editing points on the playback-side and recording-side video tapes, and means for deriving the first and second subcarrier phases based on the time code signals reproduced at the first and second editing points, comparing derived first and second subcarrier phases at the first and second editing points, and shifting one of the first or second editing points so that the first and second subcarrier phases at the first and second editing points match.

In the practical embodiment, the editing control system further comprises means for producing a reference synchronizing signal based on which reference color frame phase can be derived, and the playback-side and recording-side video tape recorders periodically reproduce first and second color framing pulses at given timings relative to picture frames on the playback-side and recording-side video tapes, which first and second color framing pulses are locked with the reference synchronizing signal at timings independent of each other. The playback-side video tape recorder is responsive to locking of the first color framing pulse with the reference synchronizing signal to output a first locked condition indicative signal, and the recording-side video tape recorder is responsive to locking of the second color framing pulse with the reference synchronizing signal to output a second locked condition indicative signal, and the means for detecting the first color subcarrier's phase and means for detecting the second color subcarrier's phase are responsive to the first and second locking condition indicative signals for deriving the first and second color subcarrier phases relative to the first and second time code signals.

In the preferred process for detecting the phase of the color subcarrier on the basis of the time code signal, the means for detecting the first color subcarrier's phase is responsive to the first locked condition indicative signal for detecting first phase difference of the first color framing pulses relative to the reference color frame phase at the timing of the first time code signal, and detects second phase difference between the first color framing pulse and a first color frame phase representative of the first subcarrier phase in the video information recorded on the playback-side video tape recorder, and thereby detects the relationship of color frame phase to the first time code signal based on the first and second phase differences. Similarly, the means for detecting the second color subcarrier phase is responsive to the second locked condition indicative signal for detecting first phase difference of the second color framing pulses relative to the reference color frame phase at the timing of the second time code signal, and detects the second phase difference between the second color framing pulse and a second color frame phase representative of the second subcarrier phase in the video information recorded on the recording-side video tape recorder, and thereby detects the relationship of color frame phase to the second time code signal based on the second and second phase differences.

In practical operation, the playback-side and recording-side video tape recorders are driven in the test mode in advance of the editing operation, and the the means for detecting a first color subcarrier phase and means for detecting a second color subcarrier phase are active during the test mode operation for detecting the first and second color frame phases relative to the first and second time code signals.

According to another aspect of the invention, an electronic edit control system comprises a playback-side video tape recorder loaded thereon a playback-side video tape with video information including a first color framing pulse, a first time code signal and a first color subcarrier which has a phase variation cycle which returns to an initial phase after a given number of frames, a recording-side video tape recorder having loaded thereon a recording-side video tape video information including a second color framing pulse, a second time code signals and a second color subcarrier which has a phase variation cycle corresponding to that recorded on the playback-side video tape recorded thereon, and a microprocessor-based editing control apparatus including first means for operating the playback-side and recording-side video tape recorders in a test mode, second means, active during the test mode operation, for detecting the phase of first color subcarrier in the video information recorded on the playback-side video tape, relative to the time code signals reproduced from the playback-side video tape recorder, third means, also active during the test mode operation, for detecting the phase of second color subcarrier in the video information recorded on the recording-side video tape, relative to the time code signals reproduced from the recording-side video tape recorder; fourth means, manually operable, for setting first and second editing points on the playback-side and recording-side video tapes, and fifth means, active during an edit mode operation, for deriving the first and second subcarrier phases based on the time code signals reproduced at the first and second editing points, comparing derived first and second subcarrier phases at the first and second editing points, and shifting one of the first and second editing points so that the first and second subcarrier phases at the first and second editing points match.

The electronic editing control system further comprises means for producing a reference synchronizing signal based on which the reference color frame phase can be derived, the playback-side and recording side video tape recorders can detect locking of first and second color framing pulses with the reference synchronizing signal at timings independent of each other to produce first and second locked condition indicative signals. The second and third means are responsive to the first and second locked condition indicative signals for deriving the first and second color subcarrier phases relative to the first and second time code signals. The the second means is responsive to the first locked condition indicative signal for mathematically deriving a first value indicative of the first phase difference between the first color framing pulses and the reference color frame phase at the timing of the first time code signal, and a second value representive of second phase difference between the first color framing pulse and a first color frame phase representative of the first subcarrier phase in the video information recorded on the playback-side video tape recorder, and thereby deriving a third value indicative of a third phase difference between the first color frame phase and the first time code signal based on the first and second values.

The third means is responsive to the second locked condition indicative signal for mathematically deriving a fourth value indicative of a fourth phase difference between the second color framing pulses and the reference color frame phase at the timing of the second time code signal, and a fifth value representive of fifth phase difference between the second color framing pulse and a second color frame phase representative of the second subcarrier phase in the video information recorded on the recording-side video tape recorder, and deriving a sixth value indicative of a sixth phase difference between the second color frame phase relative to the second time code signal based on the fourth and fifth values. The fifth means of the editing control apparatus derives the first and second subcarrier phases at the first and second edit points based on the first and second time code signals at the first and second edit points and the third and sixth values.

According to a further aspect of the invention an edit control system comprises a playback-side video tape recorder loaded thereon with a video tape on which color video information to be reproduced along with control signals containing periodically superimposed color framing data and color subcarrier which has a phase variation cycle to return an initial phase through a given number of frames has been recorded, a recording-side video tape recorder loaded thereon with a video tape having video information to be reproduced with control signals containing periodically superimposed color framing data and color subcarrier which has a phase variation cycle corresponding to that recorded on the playback-side video tape recorded thereon, means for detecting phase of the first color subcarrier in the video information recorded on the playback-side video tape relative to the time code signals reproduced from the playback-side video tape recorder, means for detecting the phase of a second color subcarrier in the video information recorded on the recording-side video tape relative to the time code signals reproduced from the recording-side video tape recorder, and means for setting first and second editing points on the playback-side and recording-side video tapes, means for deriving the phases of first and second subcarrier based on the color framing data at the first and second editing points, comparing derived first and second subcarrier phases at the first and second editing points, and shifting one of the first or second editing points so that the first and second subcarrier phases at the first and second editing points match.

## BRIEF DESCRIPTION OF THE DRAWINGS

The present invention will be understood more fully from the detailed description given herebelow and from the accompanying drawings of the preferred embodiment of the invention, which, however, should not be taken to limit the invention to the specific embodiment but are for explanation and understanding only.

In the drawings:

Fig. I is a schematic block diagram of an editing control system according to the invention;

Fig. 2 is a flowchart showing a color frame phase detecting program to be executed by a microprocessor incorporated in the preferred embodiment of the edit control system of Fig. I;

Fig. 3 is a flowchart showing a edit control program to be executed by a microprocessor incorporated in the preferred embodiment of the edit control system of Fig. I; and

Fig. 4 is a timing chart showing relationship of the of the signals produced during edit control operation.

## DESCRIPTION OF THE PREFERRED EMBODIMENT

Referring now to the drawings, particularly to Fig. I, the preferred embodiment of an editing system, according to the invention, for video tape recorders includes an electronic editing control apparatus I0. The editing control apparatus I0 is connected to a play-back side video tape recorder (P-VTR) 40 and a reproducing-side video tape recorder (R-VTR) 42. The P-VTR 40 and the R-VTR 42 are driven synchronously by a reference synchronization signal generator 50.

The VTRs 40 and 42 are connected through a VTR interface I2 to a microprocessor unit (MPU) I4 of the editing control apparatus I0. The editing control apparatus also includes a memory I6 which includes a a register, a counter, etc., necessary for editing and performing the editing program. Accordingly, the memory I6 includes a read-only memory (ROM) containing the editing program, and a random-access memory (RAM) required for performing the program. A numeric display I8 is connected through a display interface 20 to the MPU I4. Furthermore, a key board 22 is connected through a key board interface 24 to the MPU I4.

The VTR interface I2 is designed to output operation commands to the VTRs 40 and 42, and receives operation status signals $SST_1$ and $SST_2$. The VTR interface I2 also receives CCL pulse signals reproduced by the VTRs 40 and 42. The VTRs 40 and 42 are connected to a video switcher 26 which is, in turn, connected to monitors 44 and 46.

Control signals are supplied to the video switcher 26 from the VTR interface I2. On the other hand, the editing control apparatus I0 includes an oscillator 28 which includes a crystal oscillator. The oscillator 28 generates clock signals and supplies them to the video switcher 26. The clock signals of the oscillator I4 are also supplied to a frequency divider 30. The frequency divider 30 is designed to generate interrupting clock signals based on the input clock signals to supply to the MPU I4.

The VTR interface I2, the MPU I4, the memory I6, the display I8, the display interface 20, the key board 22, the key board interface 24, the video switcher 26, oscillator 28 and the frequency divider 30 constitute the editing control apparatus. In practice, the components constituting the editing control apparatus I0 are contained in a single cabinet.

When the color framing edit is performed by the preferred embodiment of the editing system; the R-VTR 42 and the P-VTR 40 are provisionally driven in synchronism with the reference synchronizing signal REF prior to the color framing editing operation. During this initial driving, color framing pulses $CFP_1$ and $CFP_2$ are respectively reproduced from the R-VTR 42 and the P-VTR 40. The color framing pulses $CFP_1$ and $CFP_2$ are applied to the VTR interface I2 of the edit control apparatus I0. To the editing control apparatus I0, the reference synchronizing signal REF is also applied from the reference synchronizing signal generator 50. The editing control apparatus I0 derives a reference color frame phase REFCF based on the reference synchronizing signal REF. The edit control appara-

tus I0 compares the derived reference color frame phase REFCF with phases of the color frame pulse signals $CFP_1$ and $CFP_2$ in order to derive phase differences. Based on the derived phase difference, the color frame phases of the video signals reproduced by the VTRs 40 and 42 are adjusted in order to match the color frame phases of the video signals to each other.

For example, the editor I0 may adjust phase of the video signal reproduced by the P-VTR 40 in order to match the color frame phase thereof with that of the video signal reproduced by the R-VTR 42. After this adjustment, the video signal recorded on the video tape loaded on the P-VTR 40 is recorded on a master tape loaded on the R-VTR 42 by color framing edit.

Practical color fram editing operations to be performed by the preferred embodiment of the editting system according to the invention will be described herebelow with reference to Figs. 2, 3 and 4. As will be seen from Fig. 4, the process shown is directed to color framing editing operations for PAL system television signals.

In order to perform color frame editing, the edit control apparatus I0 performs operations according to the process illustrated in Figs. 2 and 3. Fig. 2 shows a process for detecting the relationship of the color frame phases of the video signals reproduced by the P-VTR 40 and R-VTR 42, and the time code signal. This process is performed during a test mode operation. For this, the memory I6 in the edit control apparatus I0 stores a color frame phase detecting program of Fig. 2. The shown program is executed with respect to each of the P-VTR 40 and R-VTR 42 during test mode operation. The color frame phase detecting program is generally triggered in response to locking of the color frame pulses $CFP_1$ and $CFP_2$ and the reference color frame phase signal REFCF. Therefore, in advance of starting execution of the color frame phase detecting program, respective P-VTR 40 and R-VTR are driven in test run mode. During test run mode operation, both the P-VTR 40 and R-VTR 42 receive the reference synchronization signal REF from the reference synchronization signal generator 50. Based on the received reference synchronization signal REF, the reference color frame phase REFCF is derived Though it has not been clearly illustrated, each of the P-VTR 40 and R-VTR 42 compares the color frame pulses and the reference color frame phase to produce an error signal to be fed to a tape drive servo system. The tape drive servo system controls the tape driving speed to reduce the error signal to zero. When the color frame pulses $CFP_1$ and $CFP_2$ lock with the reference color frame phase REFCF, respective P-VTR 40 and R-VTR 42 produces status signals $STT_1$ and $STT_2$ indicative that the color frame phase signals $CFP_1$ and $CFP_2$ are in a locked condition. The status signals $STT_1$ and $SST_2$ are input to the editing control apparatus I0 to trigger the latter. In response to this, the editing control apparatus I0 starts execution of the color frame phase detecting program to detect the relationship of the color frame phases of the video signals reproduced by respective P-VTR 40 and R-VTR 42.

It should be noted that the detection of the color frame phase relative to the reference color frame phase is performed with respect to each of the video signals reproduced by the P-VTR 40 and the R-VTR 42, independently of the other. Since the process of detecting color frame phase relative to the reference color frame phase to be performed with respect to the video signal reproduce by the R-VTR 42 is identical to that with respect to the video signal reproduced by the P-VTR 40, the following discussion is given only for the color frame phase detection for the video signal reproduced by the P-VTR 40.

As set forth above, the color frame phase detecting program for detecting the color frame phase of the video signal reproduced by the P-VTR 40 during the test mode operation, is triggered in response to the status signal $STT_1$ from the P-VTR. After starting execution of the color frame phase detecting program at a step $SP_1$ in response to the status signal $STT_1$, the time code signal $TTC_1$ reproduced by the P-VTR 40 is obtained at a step $SP_1$ At the same time, the reference color frame phase REFCF as derived based on the reference synchronization signal REF is read, at the step $SP_2$ Subsequently, at a step $SP_3$, relationship between the time code signal $TTC_1$ and the reference color frame phase REFCF is detected.

For example, assuming the color frame data of the time code signal $TTC_1$ as shown in Fig. 4(G) and the reference color frame phase REFCF as shown in Fig. 4(A) are obtained at the step $SP_2$, relative color frame data can be made to match with the reference color frame phase REFCF by dividing the color frame data by "4" and by adding either "I", "2" or "3" to the remainder. Namely, since the color frame cycle is constituted of 4 color frames in PAL system, correlation can be established by adjusting the frame data to be a multiple of "4". In order words, the remainder "N (0, I, 2, 3)-" obtained by dividing the frame data of the time code signal $TTC_1$ indicates a color frame difference relative to the reference color frame phase REFCF. Therefore, the remainder N obtained at the step $SP_3$ serves as color frame phase difference indicative value. This color frame difference indicative value N is stored in the memory I6.

Thereafter, at a step $SP_4$ the editing control apparatus I0 senses the key board 24 and subsequently derives a phase difference DIF between the color frame pulse $CFP_1$ as shown in Fig. 4(E) and a color frame phase $TPV_1$ of the video signal on the tape, which color frame phase $TPV_1$ is illustrated in Fig. 4(F) Subsequently, at a step $SP_5$, a relationship between the color frame phase $TPV_1$ and the reference color frame phase REFCF is derived on the basis of the color frame difference indicative value N and the phase difference indicative value DIF. The value derived at the step $SP_5$ is stored in the memory as a relative tape color frame phase indicative value. Thereafter the process returns to a main routine at a step $SP_6$.

Here, since the color frame phase signal $CFP_1$ and the reference color frame phase REFCF are locked as set forth above, by providing the color frame difference indicative value N, the relationship between the time code signal $TTC_1$ and the color frame phase signal $CFP_1$ can be derived based thereon. As set forth, since the phase difference between the color frame pulse $CFP_1$ and the color frame phase $TPV_1$ of the video signal on the tape can be derived at the step $SP_4$, the color frame phase relative to the time code signal $TTC_1$ can be derived.

Based on the relationship between the time code signal $TTC_1$ and the color frame phase $TPV_1$ of the video signal on the tape, color framing edit is performed according to the process illustrated in Fig. 3. In practice, the color framing edit operation can be taken place in various modes, e.g. assemble mode and insert mode. For example, in the assemble mode, picture is connected from an edit start point in record servo condition. On the other hand, in the insert mode, a new picture is inserted into a previously recorded tape in the playback servo condition. Such edit modes are selected through the key board 24. After selecting one of the edit modes, the P-VTR is driven in playback search mode to perform picture search for locating the edit start point. This picture search operation for locating the edit start point is also controlled manually by means of the key board 24. Namely, by the manual operation of the key board, search mode command is supplied from the MPU I4 to the P-VTR 40 via the VTR interface I2. The MPU I4 further supplies a change-over signal to the video switcher 26 via the VTR interface I2 to supply the reproduced video signal from the P-VTR 40 to the monitor 44. Accordingly, the picture from the video tape of the P-VTR 40 are made on the monitor 44, while the video tape of the P-VTR is driven in the forward and backward direction according to the search command.

During the aforementioned picture search operation, the CTL pulses are reproduced from the tape by a CTL head. The CTL pulses are supplied to the memory I6 via the VTR interface I2 and the MPU I4. The CTL pulses are counted by a CTL counter (not shown) arranged in the memory I6 under the control of the MPU I4. Then, the output of the CTL counter is supplied to a display register (not shown). The display register counts the CTL signals to produce, hour, minutes, second, frame indicative signal. This signal is supplied to the display I8 via the display interface 20 to be displayed the information.

When the edit start point is find, an IN button (not shown) on the key board is depressed to set an IN point. Data with respect to the IN point is stored in the memory I6. According to the aforemention process, the IN points of the tape on the P-VTR 40 and the tape on the R-VTR are set.

After setting the IN points, the edit control program of Fig. 3 is executed from a step $SP_{10}$ Immediately after "START" at the step $SP_{10}$, IN points data are read out from the memory I6 at a step $SP_{11}$ At the step $SP_{11}$, the time code signals $TTC_1$ and $TTC_2$ at respectively corresponding IN points are read. The time code signals at the IN points will be referred to as "$IN_1$," and "$IN_2$". At a step $SP_{12}$, the color frame phases $TPV_1$ and $TPV_2$ of video signals on the tapes of the P-VTR 40 and R-VTR 42 are determined in the manner set forth above. Namely, during execution of the color frame phase detecting program of Fig. 2, the color frame phase $TPV_1$ and $TPV_2$ relative to the time code signal $TTC_1$ and $TTC_2$ are determined. Therefore, the color frame phases at the IN points can be determined on the basis of the time code signals $IN_1$ and $IN_2$ at the IN points.

At a step $SP_{13}$, the color frame phases $TPV_1$ and $TPV_2$ as derived at the step $SP_{12}$ are compared to each other for judging whether the continuity of a color subcarrier signal can be maintained when the picture reproduced by the P-VTR 40 at the IN point is connected to the picture reproduced by the R-VTR at the IN point. When the continuity of the color subcarrier can be obtained, the video signal reproduced by the P-VTR 40 is transferred to the R-VTR 42 for recording. On the other hand, when the color frame phases $TPV_1$ and $TPV_2$ are different from each other and thus continuity can be distroyed by connecting the picture of the P-VTR 40 to the picture of the R-VTR 42 at the IN points, the edit control apparatus I0 produces a control command for adjusting color frame phase of one of the video signals on the tapes of the P-VTR 40 and the R-VTR 42. In practice, the control command is supplied to the P-VTR to shift the IN point to the picture having the color frame phase $TPV_1$ matching with that of the video signal on the tape of the R-VTR. After adjusting the color frame phase of the video signal of the tape on the P-VTR to match with that o the R-VTR, edit operation is started. After starting the edit operation, the edit control program of Fig. 3 goes END at a step $SP_{14}$.

It should be appreciated that, though the foregoing discussion has been concentrated at the color frame phase adjustment at the IN points, similar process can be applied for adjusting an OUT point where edit operation ends. In the practical operation, the OUT points may be set at the picture search for locating the IN points.

Practical edit control operation by utilizing the preferred embodiment of the edit control apparatus as set forth above will be disclosed in terms of a master tape on the R-VTR 42 having the color frame pulse $CFP_1$, the color frame phase $TPV_1$ and the time code signal $TTC_1$ as illustrated in Figs. 2-(E) to 2(G), and an original tape on the P-VTR 40 having the color frame pulse $CFP_2$, the color frame phase $TPV_2$ and the time code signal $TTC_2$ as illustrated in Figs. 4(B) to 4(D).

As set forth, in advance of edit operation, the P-VTR 40 and R-VTR 42 are driven in test mode. During test mode operation, the color frame pulses $CFP_1$ and $CFP_2$ are respectively locked with the reference color frame phase REFCF. Assuming the color frame pulse $CFP_2$ of the video signal reproduced by the R-VTR 42 locks with the reference color frame phase REFCF, the status signal $STT_2$ is input to the edit control apparatus I0. Then, the edit control apparatus I0 becomes active to start execution of the color frame phase detecting program of Fig. 2. As seen from Fig. 2 and Figs. 4(E) to 4(G), the time code signal TTC2 reproduced by the R-VTR 42 corresponds the color frame phase "I" of the reference color frame phase REFCF. This means that the picture of three (3) frame ahead will match the color frame phase of the reference color frame phase REFCF when color frame phase adjustment is performed. Therefore, the value "3" is stored as color frame phase difference indicative value N throuh the steps $SP_2$ and $SP_3$. At will be seen from Figs. 4(E) to 4(G), the color frame phase TPV2 of the video signal on the tape of the R-VTR 42 matches the reference color frame phase REFCF. Therefore, the phase difference DIF to be derived at the step $SP_4$ is "0". Therefore, the value "3" which represents the color frame phase difference between the time code signal $TTC_2$ and the reference color frame phase REFCF also represents the phase difference between the time code signal and the color frame phase $TPV_2$ of the video signal on the tape of the R-VTR 42. Therefore, the value "3" is set as a value representative of the color frame phase difference between the time code signal $TTC_2$ and the color frame phase $TPV_2$.

On the other hand, when the color frame pulse $CFP_1$ of the video signal reproduced by the P-VTR 40 locks with the reference color frame phase REFCF, the status signal $STT_1$ is input to the edit control apparatus I0. Then, the edit control apparatus I0 becomes active to start execution of the color frame phase detecting program of Fig 2. As seen from Fig. 2 and Figs. 4(B) to 4(D), the time code signal $TTC_1$ reproduced by the P-VTR 40 corresponds the color frame phase "2" of the reference color frame phase REFCF. This means that the picture of two (2) frame ahead will match the color frame phase of the reference color frame phase REFCF when color frame phase adjustment is performed. Therefore, the value "2" is stored as color frame phase difference indicative value N through the steps $SP_2$ and $SP_3$. At will be seen from Figs. 4(B) to 4(D), the color frame phase $TPV_1$ of the video signal on the tape of the P-VTR 40 matches the reference color frame phase REFCF. Therefore, the phase difference DIF to be derived at the step $SP_4$ is "2". Therefore, the value "2" which represents the color frame phase difference between the time code signal $TTC_1$ and the color frame phase $TPV_1$ of the video signal on the tape of the P-VTR 40. Therefore, the value "2" is set as a value representative of the color frame phase difference between the time code signal $TTC_1$ and the color frame phase $TPV_1$.

After finishing the test mode operation, the picture search for the original tape on the P-VTR 40 and the master tape on the R-VTR 42 is performed to set the IN points. Assuming the picture having the time code signal $TTC_2$ having a value "I4" is set as IN point with respect to the master tape on the R-VTR 42, and the picture having the time code signal $TTC_1$ having a value "I05" is set as IN point for the original tape on the P-VTR 40, the color frame phases $TPV_1$ and $TPV_2$ are derived based on the time code signal values, i.e. "I05" and "I4" and the color frame difference indicative values "2" and "3" as set in the step $SP_5$ of the color frame phase detecting program of Fig. 2, at a steps $SP_{10}$ and $SP_{11}$. In this particular case, the color signal phase $TPV_2$ of the master tape on the R-VTR is "I" and the color signal phase $TPV_1$ of the original tape on the P-VTR 40 is "3". Based on this, the edit control apparatus I0 supplies the control command to drive the P-VTR 40 to transfer the tape in forward or reverse direction to locate the picture frame having the color frame phase "I" matching with the color frame phase TPV2 (= "I") of the master tape, at a step $SP_{13}$.

Thus, according to the above mentioned embodiment, color framing edit can be performed without transmitting the color framing pulses between the VTRs 40 and 42 and the editer 4 through a specifically provided data lines or signal lines.

This reduces cables to be arranged between the VTRs and the edit control apparatus. Therefore, by neglecting the cables for transferring the color framing pulses only for color framing edit, the system can be compact enough and simplified in construction. In addtion, since the time code signals and the status signals are normally reproduced by the VTRs as a part of video signals and transferred to the edit control apparatus with the video tape for the function other than color framing edit. Therefore, it is not reuqired to add the circuits for transmitting and receiving the time code signals and the status signal.

It should be appreciated that, though reference color frame phase varies in each frame. However it is locked to the color framing pulses, from which the fields can be known. Therefore, the phase can be controlled in each field on basis of the time code signals which varies in each frame.

The above-mentioned embodiment shows an electronic editing system having the P-VTR and the R-VTR, to which this invention is applied. However, this invention is not limited to this embodiment, and is applicable to the system having a plurality of sets of reproducing VTRs and switchers.

As described above, this invention can perform color frame editing operations without transmitting or receiving the color frame pulses from VTRs to the the editer, therefore an electronic editing system employing the invention can be made smaller and simpler since the transmitting and receiving portion can be omitted.

While the present invention has been disclosed in terms of the preferred embodiment in order to facilitate better understanding of the invention, it. should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

## Claims

I. An edit control system comprising:

a playback-side video tape recorder loaded thereon a playback-side video tape with video information including time code signals and color subcarrier which has a phase variation cycle to return an initial phase through a given number of frames;

a recording-side video tape recorder loaded thereon a recording-side video tape recorded thereon video information including time code signals and color subcarrier which has a phase variation cycle corresponding to that recorded on said playback-side video tape;

means for detecting a first color subcarrier phase in said video information recorded on said playback-side video tape, relative to said time code signals reproduced from said playback-side video tape recorder;

means for detecting a second color subcarrier phase in said video information recorded on said recording-side video tape, relative to said time code signals reproduced from said recording-side video tape recorder;

means for setting first and second editing points on said playback-side and recording-side video tapes; and

means for deriving said first and second subcarrier phases based on said time code signals reproduced at said first and second editing points, comparing derived first and second subcarrier phases at said first and second editing points, and shifting one of said first and second editing points so that said first and second subcarrier phases at said first and second editing points match.

2. An edit control system as set forth in claim I, which further comprises means for producing a reference synchronizing signal based on which a reference color frame phase can be derived, and said playback-side and recording-side video tape recorder periodically reproduce first and second color framing pulses at given timings relative to picture frames on said playback-side and recording-side video tape, which first and second color framing pulses are locked with said reference synchronizing signal at timings independent of each other.

3. An edit control system as set forth in claim 2, wherein said playback-side video tape recorder is responsive to locking of said first color framing pulse with said reference synchronizing signal to output a first locking condition indicative signal, and said recording-side video tape recorder is responsive to locking of said second color framing pulse with said reference synchronizing signal to output a second locking condition indicative signal, and said means for detecting a first color subcarrier phase and means for detecting a second color subcarrier phase are responsive to said first and second locking condition indicative signals for deriving said first and second color subcarrier pahses relative to said first and second time code signals.

4. An edit control system as set forth in claim 3, wherein said means for detecting said first color subcarrier phase is responsive to said first locking condition indicative signal for detecting first phase difference of said first color framing pulses relative to said reference color frame phase at the timing of said first time code signal, and detects second phase difference between said first color framing pulse and a first color frame phase representative of said first subcarrier phase in said video information recorded on said playback-side video tape recorder, and whereby detecting said color frame phase relative to said first time code signal based on said first and second phase differences.

5. An edit control system as set forth in claim 3, wherein said means for detecting said second color subcarrier phase is responsive to said second locking condition indicative signal for detecting first phase difference of said second color framing pulses relative to said reference color frame phase at the timing of said second time code signal, and detects second phase difference between said second color framing pulse and a second color frame phase representative of said second subcarrier phase in said video information recorded on said recording-side video tape recorder, and whereby detecting said color frame phase relative to said second time code signal based on said second and second phase differences.

6. An edit control system as set forth in claim 4, wherein said means for detecting said second color subcarrier phase is responsive to said second locking condition indicative signal for detecting first phase difference of said second color framing pulses relative to said reference color frame phase at the timing of said second time code signal, and detects second phase difference between said second color framing pulse and a color frame phase in said video information recorded on said recording-side video tape recorder, and whereby detecting said color frame phase relative to said second time code signal based on said second and second phase differences.

7. An edit control system as set forth in claim 6, wherein said playback-side and recording-side video tape recorders are driven in test modes in advance of editing operation, and said said means for detecting a first color subcarrier phase and means for detecting a second color subcarrier phase are active during said test mode operation for detecting said first and second color frame phases relative to said first and second time code signals.

8. An electronic edit control system comprising:

a playback-side video tape recorder loaded thereon a playback-side video tape with video information including a first color framing pulse, a first time code signal and a first color subcarrier which has a phase variation cycle to return an initial phase through a given number of frames;

a recording-side video tape recorder loaded thereon a recording-side video tape recorded thereon video information including a second color framing pulse, a second time code signals and a second color subcarrier which has a phase variation cycle corresponding to that recorded on said playback-side video tape; and

a microprocessor-based edit control apparatus including first means for operating said playback-side and recording-side video tape recorders in a test mode, second means, active during said test mode operation, for detecting a first color subcarrier phase in said video information recorded on said playback-side video tape, relative to said time code signals reproduced from said playback-side video tape recorder, third means, also active during said test mode operation, for detecting a second color subcarrier phase in said video information recorded on said recording-side video tape, relative to said time code signals reproduced from said recording-side video tape recorder; fourth means, manually operable, for setting first and second editing points on said playback-side and recording-side video tapes, and fifth means, active during an edit mode operation, for deriving said first and second subcarrier phases based on said time code signals reproduced at said first and second editing points, comparing derived first and second subcarrier phases at said first and second editing points, and shifting one of said first and second editing points so that said first and second subcarrier phases at said first and second editing points match.

9. An electronic edit control system as set forth in claim 8, which further comprises means for producing a reference synchronizing signal based on which a reference color frame phase can be derived, said playback-side and recording side video tape recorders are detective of locking of first and second color framing pulses with said reference synchronizing signal at timings independent of each other to produce first and second locking condition indicative signals.

10. An electronic edit control system as set forth in claim 9, wherein said second and third means are responsive to said first and second locking condition indicative signals for deriving said first and second color subcarrier pahses relative to said first and second time code signals.

11. An electronic edit control system as set forth in claim 10, wherein said second means is responsive to said first locking condition indicative signal for arithmetically deriving a first value indicative of a first phase difference of said first color framing pulses relative to said reference color frame phase at the timing of said first time code signal, and a second value representive of second phase difference between said first color framing pulse and a first color frame phase representative of said first subcarrier phase in said video information recorded on said playback-side video tape recorder, and whereby deriving a third value indicative of a thid phase difference of said first color frame phase relative to said first time code signal based on said first and second values.

l2. An electronic edit control system as set forth in claim ll, wherein said third means is responsive to said second locking condition indicative signal for arithmetically deriving a fourth value indicative of a fourth phase difference of said second color framing pulses relative to said reference color frame phase at the timing of said second time code signal, and a fifth value representive of fifth phase difference between said second color framing pulse and a second color frame phase representative of said second subcarrier phase in said video information recorded on said recording-side video tape recorder, and whereby deriving a sixth value indicative of a sixth phase difference of said second color frame phase relative to said second time code signal based on said fourth and fifth values.

l3. An electronic edit control system as set forth in claim l2, wherein said fifth mmeans of said edit control apparatus derives said first and second subcarrier phases at said first and second edit points based on said first and second time code signals at said first and second edit points and said third and sixth values.

l4. An edit control system comprising:

a playback-side video tape recorder loaded thereon a playback-side video tape with color video information to be reproduced with control signals containing periodically superimposed color framing data and color subcarrier which has a phase variation cycle to return an initial phase through a given number of frames;

a recording-side video tape recorder loaded thereon a recording-side video tape recorded thereon video information to be reproduced with control signals containing periodically superimposed color framing data and color subcarrier which has a phase variation cycle corresponding to that recorded on said playback-side video tape;

means for detecting a first color subcarrier phase in said video information recorded on said playback-side video tape, relative to said time code signals reproduced from said playback-side video tape recorder;

means for detecting a second color subcarrier phase in said video information recorded on said recording-side video tape, relative to said time code signals reproduced from said recording-side video tape recorder;

means for setting first and second editing points on said playback-side and recording-side video tapes; and

means for deriving said first and second subcarrier phases based on said color framing data corresponding to at said first and second editing points, comparing derived first and second subcarrier phases at said first and second editing points, and shifting one of said first and second editing points so that said first and second subcarrier phases at said first and second editing points match.

FIG. 1

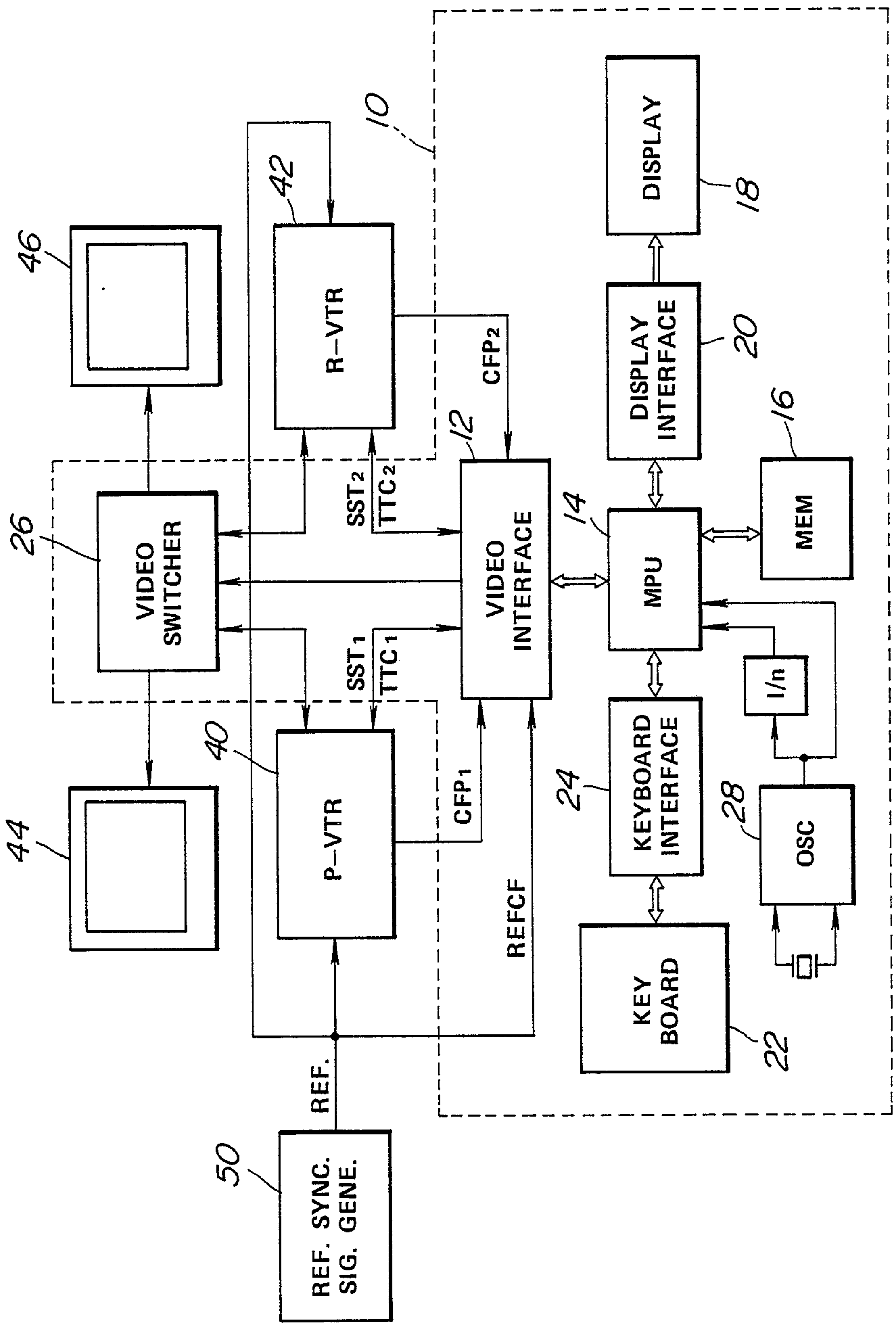

VIDEO SWITCHER
R–VTR
P–VTR
VIDEO INTERFACE
DISPLAY
DISPLAY INTERFACE
MPU
MEM
KEYBOARD INTERFACE
KEY BOARD
OSC
I/n
REF. SYNC. SIG. GENE.
REF.
REFCF
CFP1
CFP2
SST1
TTC1
SST2
TTC2
10
12
14
16
18
20
22
24
26
28
40
42
44
46
50

FIG. 2

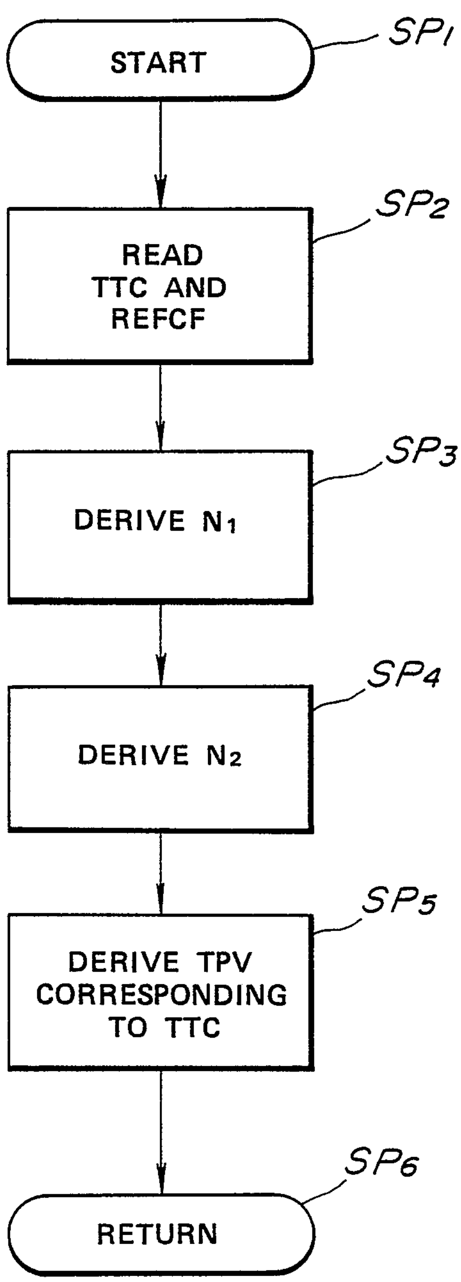
START
SP1
READ TTC AND REFCF
SP2
DERIVE N1
SP3
DERIVE N2
SP4
DERIVE TPV CORRESPONDING TO TTC
SP5
RETURN
SP6

FIG. 3

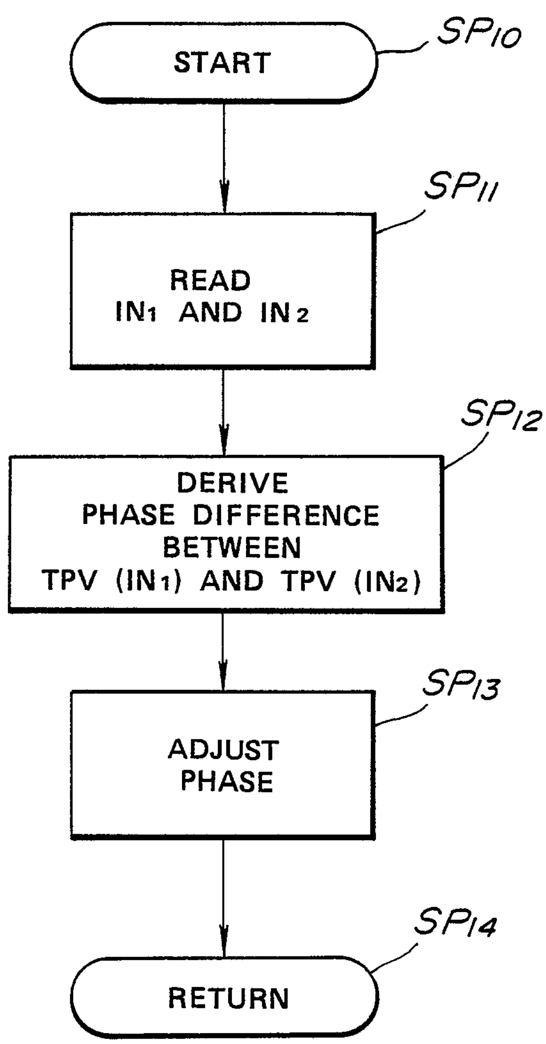
START
SP10
READ IN1 AND IN2
SP11
DERIVE PHASE DIFFERENCE BETWEEN TPV (IN1) AND TPV (IN2)
SP12
ADJUST PHASE
SP13
RETURN
SP14

FIG.4

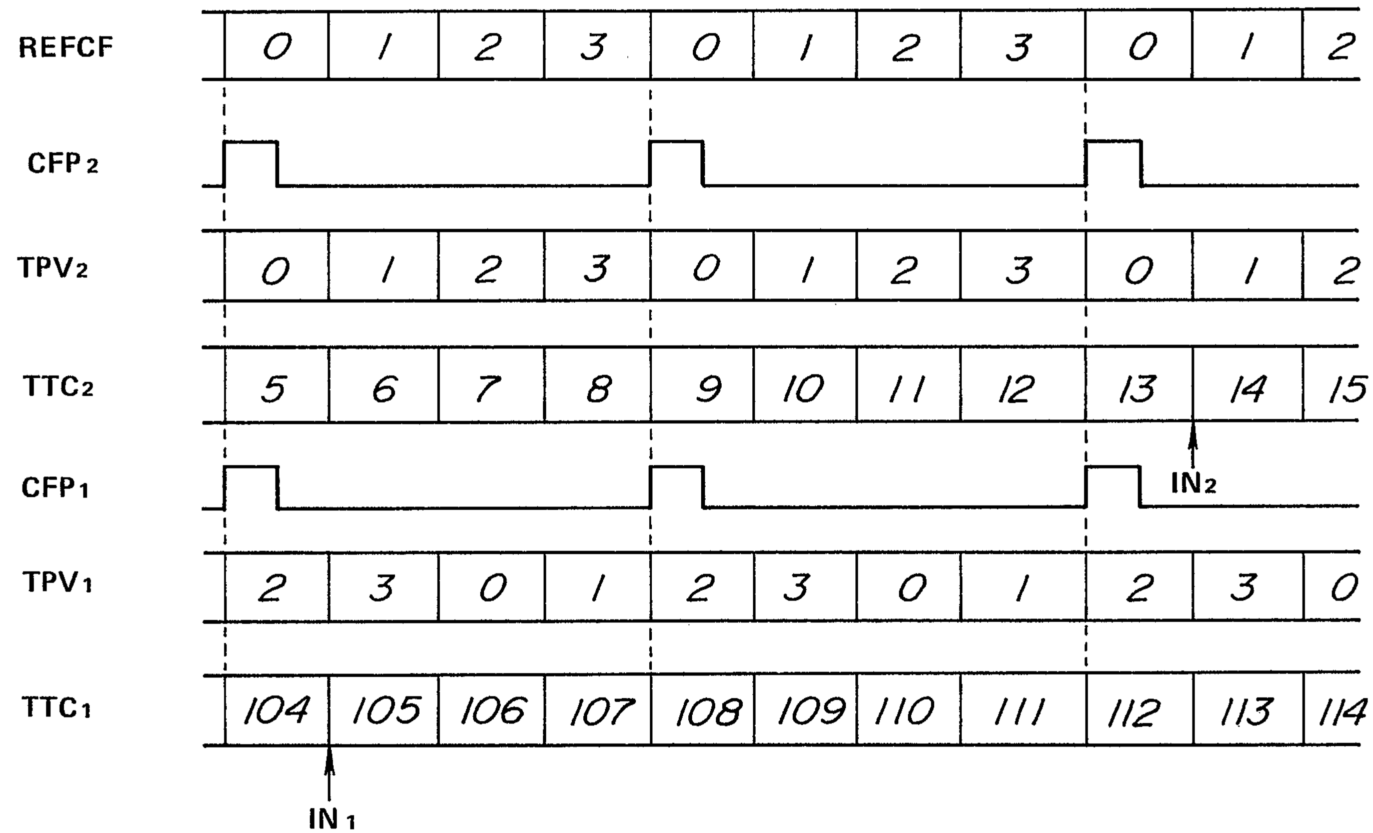
REFCF
0 1 2 3 0 1 2 3 0 1 2
CFP2
TPV2
0 1 2 3 0 1 2 3 0 1 2
TTC2
5 6 7 8 9 10 11 12 13 14 15
IN2
CFP1
TPV1
2 3 0 1 2 3 0 1 2 3 0
TTC1
104 105 106 107 108 109 110 111 112 113 114
IN1